# EUROPÄISCHE PATENTANMELDUNG

(11) **EP 3 763 463 A1**
(43) Veröffentlichungstag der Anmeldung: **13.01.2021**
(21) Anmeldenummer: 20184512.0
(22) Anmeldetag: 07.07.2020
(51) Int. Cl.: B22F 3/105, B22F 7/00, B22F 7/06, B22F 7/08, B23K 15/00, B23K 26/02, B23K 26/342, B23K 26/60, B33Y 10/00, C22C 1/10

(54) **VERFAHREN ZUR HERSTELLUNG EINES VERBUNDBAUTEILS**

(30) Priorität: 08.07.2019 DE 102019209992
(71) Anmelder: FRAUNHOFER-GESELLSCHAFT zur Förderung der angewandten Forschung e.V., 80686 München (DE)
(72) Erfinder: Moritz, Juliane, 01277 Dresden (DE); Klotzbach, Udo, 01277 Dresden (DE); Moritz, Tassilo, 01277 Dresden (DE); Mosch, Sindy, 01277 Dresden (DE); Müller-Köhn, Axel, 01277 Dresden (DE)
(74) Vertreter: Pfenning, Meinig & Partner mbB

(57) **Zusammenfassung**

Bei dem Verfahren zur Herstellung eines Verbundbauteils wird ein Grundkörper aus keramischem Werkstoff in eine komplementär zur äußeren Geometrie des Grundkörpers aufweisende Aufnahme einer Startplatte eingesetzt. Die Startplatte weist eine ebene planare Oberfläche auf, die mit einer Oberfläche des Grundkörpers oder der Oberfläche einer metallischen Schicht, die auf der Oberfläche des Grundkörpers ausgebildet worden ist, fluchtet und die Startplatte auf einer stufenweise absenkbaren Bauplattform angeordnet ist. Pulverförmiger metallischer Werkstoff wird auf die Oberfläche des Grundkörpers oder der Oberfläche der mit metallischem Werkstoff gebildeten Schicht aufgebracht und mit einem Energiestrahl lokal definiert versintert oder verschmolzen. Nach einem Absenken der Bauplattform mit Startplatte und beschichtetem Grundkörper mit einem definierten Weg wird weiterer pulverförmiger Werkstoff aufgebracht und mit dem Energiestrahl dieser pulverförmige metallische Werkstoff wieder lokal definiert versintert oder verschmolzen. Dies wird so oft wiederholt, bis die gewünschte dreidimensionale metallische Struktur auf der Oberfläche des keramischen Grundkörpers ausgebildet worden ist. Im Anschluss daran wird nicht zur Struktur gehörendes loses Metallpulver entfernt.

## Beschreibung

Der Erfindung betrifft die Herstellung von Verbundbauteilen, die auch mittels strahlbasierten additiven Fertigungsverfahren ausgebildet werden können, und die mit metallischen dreidimensionalen Strukturen an einer Oberfläche eines keramischen Grundkörpers funktionalisiert oder individualisiert werden können, um damit aufwändige Füge- oder Beschichtungsprozesse einzusparen.

Die Anwendungsgebiete der erfindungsgemäß hergestellten Verbundbauteile sind entsprechend den vielfältigen Materialkombinationsmöglichkeiten sehr breit gefächert und umfassen z.B. folgende Branchen: Fahrzeugbau, Luft- und Raumfahrt, Werkzeugbau, Maschinenbau, Elektrotechnik/Elektronik, Chemische Industrie, Medizintechnik; Schmuck- und Uhrenindustrie. Als Anwendungsbeispiele für Bauteil sind anzuführen: Elektrische Durchführungen, Sensoren, Aktoren, Antennen, Implantate, Werkzeuge oder Fahrzeugkomponenten mit sensorischen Eigenschaften, Reaktoren, Wärmetauscher, Energiespeichersysteme, fluidische Systeme oder Schmuck- und Designelemente.

Ein wichtiger Trend in der technischen Entwicklung ist die Funktionalisierung von Bauteilen mit dem Ziel, möglichst viele Funktionalitäten raum- und materialsparend in einem Bauteil zu ermöglichen. Die Funktionalisierung erfordert zumeist die Kombination verschiedener Werkstoffe mit z.T. sehr verschiedenen oder gegensätzlichen Eigenschaften, wie z.B. die elektrische Leitfähigkeit und elektrische Isolation oder Duktilität und extreme Härte, lokal definiert zu beeinflussen. Vielfach fällt die jeweilige gewünschte Eigenschaftskombination auf die Werkstoffkombination Metall-Keramik. Neben der Auswahl einer passenden Werkstoffkombination hat das Verfahren zur Erreichung eines Materialverbundes oder-hybrids einen ausschlaggebenden Einfluss auf die Herstellungskosten sowie auf die Qualität und Haltbarkeit eines solchen Hybridbauteils.

Mit den Verfahren der Additiven Fertigung stehen der Bauteilentwicklung hinsichtlich geometrischer Freiheit und Komplexität völlig neue Möglichkeiten offen. Infolge grundlegend unterschiedlicher Verarbeitungseigenschaften von Metallen und keramischen Werkstoffen differenzieren die additiven Herstellungsmethoden für beide Werkstoffklassen sehr stark. Strahlbasierte additive Fertigungsverfahren bieten aufgrund ihrer erreichbaren Toleranzen und ihrer Strukturauflösung die Möglichkeit, funktionelle Strukturen in 2 ½- oder 3-dimensionaler Geometrie aufzubauen. Insbesondere elektronenstrahlbasierte additive Fertigungsmethoden, wie das Elektronenstrahlschmelzen (EBM) oder das Elektronenstrahlschweißen (EBW) sind für keramische Werkstoffe physikalisch bedingt nicht einsetzbar. Dennoch soll im Rahmen dieser Erfindung u.a. ein Lösungsansatz vorgeschlagen werden, mit dem auch elektronenstrahlbasierte additive Fertigungsverfahren auf keramischen Substraten eingesetzt werden können.

Eine laserbasierte Oberflächenstrukturierung zur Modifikation der Benetzungs- und Haftungseigenschaften ist nach DE 10 2010 027 438 A1 bekannt. Allerdings werden hierbei die erzeugten Tiefenstrukturen zumindest teilweise mit einem zum stoffschlüssigen Fügen geeigneten Kleber- oder Laminiermaterial aufgefüllt. Ein derartiger Haftvermittler ist aber bei der Erfindung nicht notwendig und führt im Einsatz solcher Bauteile zu Nachteilen.

DE 10 2017 201 507 A1 beschreibt ebenfalls eine Laserstrukturierung zur Modifizierung der Haftung an Oberflächen. Allerdings bezieht sich das Verfahren explizit auf eine Polymermatrix und das nachfolgende Aufbringen einer Haftvermittlerschicht.

In DE 103 55 983 A1 wird das Erreichen einer stoffschlüssigen Verbindung in Metall-Keramik-Kompositen durch das Einbringen von Bohrungen beschrieben. Das Verfahren beschränkt sich aber auf die Einbringung unterschiedlicher Bohrungsklassen im Hinblick auf eine Anwendung beim Verlöten von metallischen und keramischen Werkstoffen.

Es ist daher Aufgabe der Erfindung, Möglichkeiten für die Herstellung von Verbundbauteilen anzugeben, die mit keramischem und metallischem Werkstoff gebildet sind, und die einen geringen Aufwand für die Herstellung bei gleichzeitig hoher Flexibilität erfordern.

Erfindungsgemäß wird diese Aufgabe mit einem Verfahren, das die Merkmale des Anspruchs 1 aufweist, gelöst. Vorteilhafte Ausführungsformen und Weiterbildungen können mit in untergeordneten Ansprüchen bezeichneten Merkmalen realisiert werden.

Bei dem erfindungsgemäßen Verfahren zur Herstellung eines Verbundbauteils, das mit einem Grundkörper aus keramischem Werkstoff, der an mindestens einer Oberfläche mit einer dreidimensional ausgebildeten Struktur aus metallischem Werkstoff versehen ist, wird ein Grundkörper aus keramischem Werkstoff in eine komplementär zur äußeren Geometrie des Grundkörpers aufweisende Aufnahme einer Startplatte eingesetzt. Die Startplatte weist dabei eine ebene planare Oberfläche auf, die mit einer Oberfläche des Grundkörpers ausgebildet worden ist, fluchtet. Alternativ kann diese ebene planare Oberfläche auch mit einer mit metallischem Werkstoff gebildeten Schicht, die auf der Oberfläche des Grundkörpers ausgebildet worden ist, fluchten. Eine mit metallischem Werkstoff gebildet Schicht sollte zumindest dann vorhanden sein, wenn ein Elektronenstrahl als Energiestrahl eingesetzt wird.

Die Startplatte ist auf einer stufenweise absenkbaren Bauplattform angeordnet.

Eine auf der planaren Oberfläche der Startplatte ausgebildete Schicht aus metallischem Werkstoff kann vor dem ersten Aufbringen von pulverförmigem Werkstoff mit einem lokal definiert auslenkbaren Energiestrahl aufgeschmolzen werden. Nach dem Erstarren des vorab aufgeschmolzenen Werkstoffs kann eine erste Schicht des pulverförmigen metallischen Werkstoffs aufgebracht werden.

Nach einem Absenken der Bauplattform mit Startplatte und beschichtetem Grundkörper mit einem definierten Weg wird weiterer pulverförmiger metallischer Werkstoff mit konstanter Schichtdicke aufgebracht und mit dem Energiestrahl dieser pulverförmige metallische Werkstoff wieder lokal definiert versintert oder verschmolzen. Diese Vorgänge werden so oft wiederholt, bis die gewünschte dreidimensionale metallische Struktur auf der Oberfläche des keramischen Grundkörpers ausgebildet worden ist. Im Anschluss daran wird nicht zur Struktur gehörendes loses Metallpulver entfernt.

Die geschmolzene und dann erstarrte metallische Schicht kann mit dem gleichen Metall ausgebildet werden, mit dem auch die dreidimensionale metallische Struktur ausgebildet wird. Insbesondere in diesem Fall sollten die thermischen Ausdehnungskoeffizienten der keramischen und metallischen Werkstoffe nicht weit voneinander entfernt sein.

Die geschmolzene und dann erstarrte metallische Schicht kann aber auch aus einem weiteren metallischen Werkstoff ausgebildet werden. Dieser metallische Werkstoff sollte dann bevorzugt einen thermischen Ausdehnungskoeffizienten aufweisen, der zwischen den thermischen Ausdehnungskoeffizienten des keramischen Werkstoffs und dem metallischen Werkstoff, mit dem die dreidimensionale metallische Struktur ausgebildet wird, liegt.

Der keramische Grundkörper kann mittels Spritzgießens und nachfolgender Sinterung, mittels eines additiven Herstellungsverfahrens, mittels Pressen, mittels Extrusion, mittels eines Gießverfahrens oder als keramische Beschichtung hergestellt werden.

Es können prinzipiell alle keramischen Werkstoffe für die Herstellung eines Grundkörpers eingesetzt werden.

Als Energiestrahl kann ein zweidimensional auslenkbarer Laserstrahl oder Elektronenstrahl eingesetzt werden, wie dies bei den bekannten pulverbettbasierten additiven Fertigungsverfahren üblich ist.

Die mit dem Energiestrahl zu schmelzende metallische Schicht kann allein mit pulverförmigem metallischem Werkstoff, mit einer getrockneten pulverförmigen metallischen Werkstoff enthaltenden Suspension, Tinte oder Paste, durch Abscheidung aus der Gasphase, aus dem Plasma oder aus einer Lösung ausgebildet werden. Insbesondere dann, wenn ein Elektronenstrahl und ein elektrisch nichtleitender keramischer Werkstoff eingesetzt werden, sollte jedoch eine getrocknete Suspension oder Paste die zu schmelzende metallische Schicht bilden. Bei elektrisch leitenden keramischen Werkstoffen, mit denen ein Grundkörper hergestellt worden ist, wie z.B. SiC oder Siliziden kann auch metallisches Pulver aufgebracht und mit einem Elektronenstrahl aufgeschmolzen werden.

Vorteilhaft kann die Startplatte mit dem Energiestrahl vor der Ausbildung der dreidimensionalen metallischen Struktur vorgewärmt werden, was auch zur Erwärmung des pulverförmigen metallischen Werkstoffs, mit dem die dreidimensionale metallische Struktur gebildet wird sowie dem keramischen Werkstoff des Grundkörpers, führt. Hierzu kann der Brennfleck des Energiestrahls in geeigneter Form über die Oberfläche der Startplatte bewegt werden.

Mit dem erfindungsgemäßen Verfahren wird also ein keramischer Grundkörper durch pulverbettbasierte additive Fertigungsverfahren um eine metallische dreidimensionale Struktur ergänzt. Dafür kann zunächst eine entsprechende Oberfläche, auf der die dreidimensionale metallische Struktur ausgebildet werden soll, einer Vorbehandlung unterzogen werden.

Dies kann z.B. durch eine energiestrahlbasierte Strukturierung, eine mechanische Bearbeitung, bei der z.B. ein Werkstoffabtrag definiert durchgeführt wird, und/oder eine chemische Behandlung zur Verbesserung der Haftung durchgeführt werden. Als Vorbehandlung kann auch ein Strahlverfahren, bei dem Partikel auf die Oberfläche beschleunigt werden, und dadurch ein Werkstoffabtrag an der Oberfläche erreicht wird, eingesetzt werden.

Eine suspensions- oder pastenbasierte metallische Beschichtung, die dann mit einem Energiestrahl geschmolzen wird, kann insbesondere zur Ableitung von Ladungsträgern aufgebracht werden. Der so vorbereitete Grundkörper wird dann unter Nutzung additiver Fertigungsverfahren an mindestens einer Oberfläche weiter funktionalisiert, wobei ein gezieltes, insbesondere lokal definiertes Aufschmelzen des metallischen Materials durch einen bevorzugt fokussierten Energiestrahl erfolgt. Im Anschluss wird ein additiver Prozesszyklus bis zur Fertigstellung der gewünschten dreidimensionalen Struktur durchgeführt, d.h. die gesamte Bauplattform mit dem Grundkörper wird stufenweise abgesenkt, es wird schichtweise pulverförmiger metallischer Werkstoff aufgetragen und selektiv durch lokal definierten Energieeintrag (z.B. über Laser- oder Elektronenstrahl) verschmolzen oder versintert. Wird im additiven Fertigungsprozess ein Elektronenstrahl für das Aufschmelzen genutzt, ist eine vorherige metallische Beschichtung des keramischen Grundkörpers zwingend erforderlich, um so eine Ableitung der Ladungsträger zu gewährleisten und sogenannte Smoke-Effekte (Abstoßung der Pulverpartikeln durch negative Aufladung) zu vermeiden.

Mit der Erfindung können keramische Grundkörper im gesinterten Zustand mit einer metallischen, funktionellen 3D-Struktur ergänzt oder individualisiert werden, wohingegen dies mit anderen Verfahren entweder im Grünzustand der Keramik, verbunden mit einer anschließenden Co-Sinterung beider Materialien, oder nur flächig und nur in sehr dünnen Schichten erfolgen kann. Dieser Prozess kann ohne aufwändige Umbauten in einer EBM-Anlage durchgeführt werden. Es muss lediglich in die metallische Substratplatte ggf. mit einem spanenden Verfahren die entsprechende Kontur des keramischen Grundkörpers (Aufnahmevorrichtung) eingebracht werden. Damit lassen sich kostenintensive Prozessschritte einsparen.

Ebenfalls kann die Form der gewünschten metallischen 3D-Struktur bei jedem neuen Verbundbauteil ohne Aufwand verändert und angepasst werden, was eine einfache Individualisierung jedes Verbundbauteils ermöglicht.

Damit kann im Gegensatz zu den Verfahren des ermittelten Standes der Technik die Herstellung des Grundkörpers vollständig von dem Prozess der metallischen Funktionalisierung getrennt werden und erhält somit ein hohes Maß an Flexibilität in der Produktion.

Der Vorteil des Verfahrens liegt insbesondere auch darin, dass keramische Großserienbauteile eine Individualisierung und/oder Funktionalisierung erhalten können, was einer Kennzeichnung oder Nachverfolgung oder auch dem Produkt- und Markenschutz dienen oder z.B. für die Integration elektronischer Komponenten genutzt werden kann.

Nachfolgend soll die Erfindung anhand eines Beispiels näher erläutert werden.

Im Anwendungsbeispiel wird ein mit einer metallischen Beschichtung überzogener Keramikgrundkörper durch das pulverbettbasierte additive Fertigungsverfahren des selektiven Elektronenstrahlschmelzens um eine metallische dreidimensionale Struktur ergänzt. Dies erfolgt im ersten Schritt durch ein gezieltes (lokales) Aufschmelzen eines Teiles der Beschichtung durch einen fokussierten Elektronenstrahl. Hierauf wird im darauffolgenden Schritt schichtweise Pulver aufgetragen und mit einem Elektronenstrahl selektiv verschmolzen.

Bei diesem Beispiel wurde ein kommerzieller Zirkonoxidwerkstoff (Catamold TZP-A) in einer 2K-Mikrospritzgussmaschine (Boy 35 E W, Dr. Boy GmbH) in ein zylindrisches Halbzeug mit einem Durchmesser d = 30 mm durch Spritzgießen ausgebildet. Der so erhaltene Grünkörper wurde anschließend katalytisch und anschließend thermisch mit einer Aufheizrate von 1 K/min bis 600°C entbindert. Als Katalysator wurde konzentrierte Salpetersäure eingesetzt. Die Sinterung erfolgte bis 1350 °C mit einer Aufheizrate von 3 K/min, einer zweistündigen Haltezeit auf Maximaltemperatur und einer anschließenden freien Abkühlung.

Zur Verbesserung der Haftung zwischen dem keramischen Grundkörper und der metallischen Beschichtung kann eine Oberflächenvorbehandlung der Keramik mittels strahlbasierter Verfahren (z.B. Strukturierung über Laser-, Elektronenstrahl, lonenstrahl, Sandstrahl) erfolgen.

Für eine Beschichtung mit Titan zur Gewährleistung der Ableitung elektrischer Ladungsträger (Vermeidung von Smokeeffekten) während eines selektiven Elektronenstrahlbeschichtens erfolgte eine Pastenherstellung und Entbinderung mit nachfolgender Trocknung. Dazu wurde ein Ti-6Al-4V -Pulver (mit Partikelgrößen d₅₀ im Bereich 15 µm - 45 µm) in einem organischen Binder, basierend auf einer Polyvinylbutyral-Terpineol-Lösung dispergiert. Es wurde ein Feststoffgehalt ≥ 65 Masse-% eingestellt. Die Trocknung der aufgetragenen Paste auf der Oberfläche des keramischen Grundkörpers erfolgte an Luft im Bereich 80 °C bis 120 °C für jeweils 10 Minuten. Die getrocknete Schicht hatte eine Schichtdicke von 10 µm - 50 µm.

Zur Herstellung des Verbundbauteils wurde zunächst in die Mitte der Startplatte des EBM-Prozesses mittels spanender Verfahren ein Sackloch gefertigt. In dieses Sackloch wurde anschließend der mit der Beschichtung versehene Grundkörper eingesetzt, wobei die Sacklochbohrung exakt die Höhe des Grundkörpers inklusive der getrockneten Schicht aufwies, um eine gerade ebene planare Oberfläche zu bieten, die der Pulverrechen bzw. Rakel sauber und ohne Absätze bei dem EBM-Prozess überfahren kann.

Anschließend wird im Vakuum die metallische Schicht auf der Oberfläche des keramischen Grundkörpers einmal durch den Elektronenstrahl aufgeschmolzen. Der Elektronenstrahl hatte in diesem Schritt eine Stromstärke von 15 mA - 21 mA bei einem Offset von 3 mA. Die Geschwindigkeit, mit welcher der Elektronenstrahl die Oberfläche abscannte, betrug 4530 mm/s. Damit wird eine stabile Anbindung der Beschichtung an der entsprechenden Oberfläche des keramischen Grundkörpers erreicht. Im nächsten Schritt wurde die Startplatte unter Vakuumbedingungen mit einem defokussierten Elektronenstrahl auf eine Prozesstemperatur von 650 °C erwärmt. Bei diesem Aufheizvorgang wurden eine elektrische Stromstärke von 6 mA bei einer Scangeschwindigkeit von 25000 mm/s, sowie eine Wiederholrate des Abscannens von 5 - 30 eingestellt. Danach erfolgte der schichtweise Auftrag der einzelnen Pulverschichten mit einer Schichtdicke von jeweils 50 µm. Diese Schichten wurden jeweils mit einem defokussierten Elektronenstrahl lokal definiert versintert und die angestrebte Geometrie selektiv aufgeschmolzen. In diesem Schritt wurde die elektrische Stromstärke des Elektronenstrahls auf 2 mA reduziert und gleichzeitig die Wiederholrate des Abscannens pro Schicht auf 50 -150 erhöht. Die Scangeschwindigkeit betrug hierbei 13000 mm/s.

Als Ergebnis wurde ein Verbundbauteil erhalten, das die Eigenschaften keramischer und metallischer Werkstoffe vereint. Der keramische Grundkörper wurde in diesem Verfahren durch eine metallische Struktur an einer Oberfläche funktionalisiert und ergänzt. Die metallische Struktur wurde hierbei elektronenstrahlbasiert additiv aufgebracht und kann somit eine komplexe Geometrie aufweisen.

## Patentansprüche

1. Verfahren zur Herstellung eines Verbundbauteils, das mit einem Grundkörper aus keramischem Werkstoff, der an mindestens einer Oberfläche mit einer dreidimensional ausgebildeten Struktur aus metallischem Werkstoff versehen ist, bei dem
ein Grundkörper aus keramischem Werkstoff in eine komplementär zur äußeren Geometrie des Grundkörpers aufweisende Aufnahme einer Startplatte eingesetzt wird, wobei
die Startplatte eine ebene planare Oberfläche aufweist, die mit einer Oberfläche des Grundkörpers oder der Oberfläche einer metallischen Schicht, die auf der Oberfläche des Grundkörpers ausgebildet worden ist, fluchtet und
die Startplatte auf einer stufenweise absenkbaren Bauplattform angeordnet ist und
pulverförmiger metallischer Werkstoff auf die Oberfläche des Grundkörpers oder der Oberfläche der mit metallischem Werkstoff gebildeten Schicht mit konstanter Schichtdicke aufgebracht und mit einem Energiestrahl pulverförmiger Werkstoff der aufgebrachten Schicht lokal definiert versintert oder verschmolzen wird und
nach einem Absenken der Bauplattform mit Startplatte und beschichtetem Grundkörper mit einem definierten Weg weiterer pulverförmiger Werkstoff mit konstanter Schichtdicke aufgebracht und mit dem Energiestrahl dieser pulverförmige metallische Werkstoff wieder lokal definiert versintert oder verschmolzen und diese Vorgänge so oft wiederholt werden, bis die gewünschte dreidimensionale metallische Struktur auf der Oberfläche des keramischen Grundkörpers ausgebildet worden ist und
im Anschluss daran nicht zur Struktur gehörendes loses Metallpulver entfernt wird.

2. Verfahren nach Anspruch 1, **dadurch gekennzeichnet, dass** der keramische Grundkörper mittels Spritzgießens und nachfolgender Sinterung, mittels eines additiven Herstellungsverfahrens, mittels Pressen, mittels Extrusion, mittels eines Gießverfahrens oder als keramische Beschichtung hergestellt wird.

3. Verfahren nach einem der vorhergehenden Ansprüche, **dadurch gekennzeichnet, dass** die auf der planaren Oberfläche der Startplatte ausgebildete Schicht aus metallischem Werkstoff, vor dem ersten Aufbringen von pulverförmigem Werkstoff, mit einem lokal definiert auslenkbaren Energiestrahl aufgeschmolzen wird, und
nach dem Erstarren des vorab aufgeschmolzenen Werkstoffs eine erste Schicht des pulverförmigen metallischen Werkstoffs aufgebracht wird.

4. Verfahren nach dem vorhergehenden Anspruch, **dadurch gekennzeichnet, dass** die mit dem Energiestrahl zu schmelzende metallische Schicht, allein mit pulverförmigem metallischen Werkstoff, mit einer getrockneten pulverförmigen metallischen Werkstoff enthaltenden Suspension, Tinte oder Paste, durch Abscheidung aus der Gasphase, aus dem Plasma oder aus einer Lösung ausgebildet wird.

5. Verfahren nach einem der vorhergehenden Ansprüche, **dadurch gekennzeichnet, dass** als zweidimensional auslenkbarer Energiestrahl ein Laser- oder Elektronenstrahl eingesetzt wird.

6. Verfahren nach einem der vorhergehenden Ansprüche, **dadurch gekennzeichnet, dass** die Startplatte mit dem Energiestrahl vor der Ausbildung der dreidimensionalen metallischen Struktur vorgewärmt wird.

7. Verfahren nach einem der vorhergehenden Ansprüche, **dadurch gekennzeichnet, dass** die metallische aufgeschmolzene und dann erstarrte Schicht aus einem Werkstoff ausgebildet wird, dessen thermischer Ausdehnungskoeffizient zwischen den thermischen Ausdehnungskoeffizienten des keramischen Werkstoffs und dem metallischen Werkstoff, mit dem die dreidimensionale metallische Struktur gebildet wird, liegt.

8. Verfahren nach einem der vorhergehenden Ansprüche, **dadurch gekennzeichnet, dass** die Oberfläche des Grundkörpers auf der die zu schmelzende metallische Schicht ausgebildet wird, vor dem Aufbringen des dafür eingesetzten Metalls, mechanisch, mit einem Laserstrahl und/oder Elektronenstrahl und/oder chemisch vorbereitet wird.
